# EUROPÄISCHE PATENTANMELDUNG

(11) **EP 4 552 449 A2**
(43) Veröffentlichungstag der Anmeldung: **14.05.2025**
(21) Anmeldenummer: 24208781.5
(22) Anmeldetag: 24.10.2024
(51) Int. Cl.: A01B 59/00, A01B 59/043

(54) **VERBINDUNGSSYSTEM**

(30) Priorität: 09.11.2023 DE 102023131191
(71) Anmelder: KRONE Agriculture SE, 48480 Spelle (DE); Lemken GmbH & Co KG, 46519 Alpen (DE)
(72) Erfinder: Mählmann-Dunker, Hannes, 27251 Neuenkirchen (DE); Maesing, Stefan, 46325 Borken (DE)
(74) Vertreter: Engelmann, Kristiana

(57) **Zusammenfassung**

Die Erfindung betrifft ein Verbindungssystem (5) zur Verbindung einer Landmaschine (10) mit einem Zugfahrzeug (1). Um ein verbessertes System bereitzustellen, mit dem eine Landmaschine für eine Straßenfahrt zeitweise an ein Zugfahrzeug angekoppelt werden kann, ist erfindungsgemäß vorgesehen, dass das Verbindungssystem (5) eine Deichseleinheit (50) aufweist, die ein Abstützteil (51) zur Abstützung am Zugfahrzeug (1) aufweist sowie einen wenigstens indirekt mit dem Abstützteil (51) verbundenen und gegenüber diesem um eine vordere Deichselachse (B) schwenkbaren Deichselausleger (57), wobei am Deichselausleger (57) wenigstens ein Kopplungselement (18, 58, 61) zur wenigstens indirekten Ankopplung an die Landmaschine (10) angeordnet ist.

## Beschreibung

Die vorliegende Erfindung betrifft ein Verbindungssystem nach dem Oberbegriff von Anspruch 1 sowie ein Verfahren nach dem Oberbegriff von Anspruch 17.

Bereits seit Langem sind zum einen Landmaschinen bekannt, die bei der Feldbearbeitung von einer Zugmaschine gezogen werden, sowie zum anderen selbstfahrende Landmaschinen, die bei der Feldbearbeitung von einem Fahrer gesteuert werden. Diese Maschinen können auch bei Überführungsfahrten oder Straßenfahrten, also auf dem Weg vom oder zum Feld, in gleicher Weise bewegt werden, also entweder von der Zugmaschine gezogen oder selbstfahrend durch den Fahrer gelenkt. Bei gezogenen Landmaschinen wird die Bremse vom Zugfahrzeug aus mit Energie versorgt und gesteuert. Soweit vorhanden, gilt dies auch für lenkbare Achsen der gezogenen Landmaschine. Daneben kommen in zunehmendem Maße auch autonom arbeitende Landmaschinen zum Einsatz, die über einen eigenen Antrieb und eigene Lenkung verfügen und die Feldbearbeitung selbstständig, ohne Steuerkommandos eines Fahrers durchführen. Da diese Fahrzeuge eine Überführungsfahrt im Straßenverkehr nicht autonom durchführen können, müssen sie zum Beispiel auf einen Tieflader verladen werden, was aufwändig ist und die Kosten für den gesamten Einsatz erhöht.

Eine mögliche Alternative besteht darin, die Landmaschine für eine Überführungsfahrt an ein Zugfahrzeug anzuhängen, ähnlich wie einen Anhänger. Die Landmaschine könnte zum Beispiel über eine Deichsel an das Zugfahrzeug gekoppelt sein, wobei jede Lageänderung des Zugfahrzeugs relativ zur Landmaschine den Deichselwinkel oder Knickwinkel der Deichsel beeinflusst, was zum einen sensorisch erfasst und zur Lenkung der Landmaschine genutzt werden könnte. Zum anderen könnte wenigstens eine Achse auch mechanisch durch die Deichsel zwangsgelenkt werden. Allerdings bedeutet eine permanent an der Landmaschine verbleibende Deichsel eine erhebliche Behinderung beim Feldeinsatz, da sie zwangsläufig in einem Bereich angeordnet ist, der sich auf für ein Bearbeitungsgerät wie einen Pflug, eine Egge, ein Mähwerk etc. eignen würde. Es gäbe auch die Möglichkeit, eine Zugstange einzusetzen, die sowohl am Zugfahrzeug als auch an der Landmaschine frei schwenkbar angekoppelt werden kann und nach der Straßenfahrt wieder abgenommen wird. Nach dem Ende der Straßenfahrt muss die Zugstange abgenommen und verstaut werden, was einen erhöhten Aufwand bedeutet. Gleiches gilt für die erneute Montage für die nächste Straßenfahrt. Außerdem überträgt die Zugstange zwar Zug- und Druckkräfte, aber keinerlei Drehmoment, sodass sie zum Beispiel nicht für eine Zwangslenkung genutzt werden kann.

Aufgabe der Erfindung ist es, ein verbessertes System bereitzustellen, mit dem eine Landmaschine für eine Straßenfahrt zeitweise an ein Zugfahrzeug angekoppelt werden kann.

Die Aufgabe wird gelöst mit einem Verbindungssystem mit den Merkmalen des unabhängigen Patentanspruchs 1. Vorteilhafte Ausführungsformen sind den abhängigen Ansprüchen entnehmbar.

Dafür wird ein Verbindungssystem zur Verbindung einer Landmaschine mit einem Zugfahrzeug geschaffen, mit einer Deichseleinheit, die ein Abstützteil zur Abstützung am Zugfahrzeug aufweist sowie einen wenigstens indirekt mit dem Abstützteil verbundenen und gegenüber diesem um eine vordere Deichselachse schwenkbaren Deichselausleger, wobei am Deichselausleger wenigstens ein Kopplungselement zur wenigstens indirekten Ankopplung an die Landmaschine angeordnet ist.

Die Landmaschine kann auch als landwirtschaftliche Arbeitsmaschine bezeichnet werden. Es kann sich insbesondere um eine Erntemaschine wie ein Feldhäcksler, ein Mähdrescher, eine Ballenpresse oder ein Ladewagen handeln. Es könnte sich aber auch zum Beispiel um einen Zetter, einen Pflug, einen Düngerstreuer, ein Güllefass oder dergleichen handeln. Die Landmaschine ist zur Feldbearbeitung eingerichtet, beispielsweise zum Pflügen, Düngen, Mähen, Zetten, zur Erntegutaufnahme oder dergleichen. Die Landmaschine kann zur Ankopplung verschiedener Anbaugeräte eingerichtet sein, wie zum Beispiel eines Pflugs, eines Zetters, eines Schneidwerks o.Ä. Dabei kann der eigentliche Fahrzeugkörper der Landmaschine unter Umständen für keine spezifische Feldbearbeitung eingerichtet sein. Er kann allerdings Ankopplungsstrukturen wie zum Beispiel ein Dreipunkthubwerk aufweisen, über welche ein an die jeweilige Feldbearbeitung angepasstes Anbaugerät angekoppelt werden kann. Insofern ist die Landmaschine auch in diesem Fall zur Feldbearbeitung eingerichtet. Es kann sich bei der Landmaschine um einen Anhänger handeln, der bei der Feldbearbeitung von einer Zugmaschine gezogen wird. Bevorzugt weist die Landmaschine allerdings einen eigenen Fahrantrieb auf, der sie bei der Feldbearbeitung antreibt. Besonders bevorzugt ist die Landmaschine als autonomes Fahrzeug ausgebildet, welches dazu eingerichtet ist, eine Feldbearbeitung ohne Steuerkommandos eines Fahrers oder Bedieners durchzuführen. Es wäre allerdings auch denkbar, dass die Landmaschine einen Führungsstand oder eine Fahrerkabine aufweist und bedarfsweise von einem Fahrer gesteuert werden kann.

Das Zugfahrzeug kann selbst eine Landmaschine sein, es kann sich aber auch um ein anderes Fahrzeug handeln, zum Beispiel einen Lkw. Normalerweise ist das Zugfahrzeug ein Kraftfahrzeug mit eigenen Fahrantrieb, es könnte allerdings auch zum Beispiel ein Anhänger ohne eigenen Antrieb sein, der seinerseits gezogen wird. Es kann sich um ein Fahrzeug handeln, das durch einen Fahrer gelenkt wird oder um ein autonomes Fahrzeug.

Die Landmaschine und/oder das Zugfahrzeug können ganz oder teilweise als Teil des Verbindungssystems angesehen werden. Bevorzugt wird allerdings zumindest das Zugfahrzeug nicht als Teil des Verbindungssystems angesehen.

Das Verbindungssystem ist dazu ausgebildet, die Landmaschine mit dem Zugfahrzeug zu verbinden. Dabei ist insbesondere eine zeitweise Verbindung für eine Straßenfahrt vorgesehen. Bevorzugt ist die Verbindung zumindest dazu eingerichtet, Zug- und Druckkräfte zwischen Zugfahrzeug und Landmaschine zu übertragen. Optional können auch transversale Kräfte und/oder Drehmomente übertragen werden.

Das Abstützteil ist zur Abstützung am Zugfahrzeug ausgebildet. Man kann auch sagen, dass das Abstützteil zur Ankopplung an das Zugfahrzeug ausgebildet ist, wobei der Begriff "Abstützung" impliziert, dass das Abstützteil wenigstens einen überwiegenden Teil der auf die Deichseleinheit wirkenden Gewichtskraft auf das Zugfahrzeug übertragen kann, bevorzugt die gesamte Gewichtskraft. Ebenfalls bevorzugt ist das Abstützteil derart mit dem Zugfahrzeug verbindbar, dass auf die Deichseleinheit wirkende Drehmomente vom Zugfahrzeug aufgenommen werden. Derartige Drehmomente führen also nicht zu einem Schwenken oder Kippen des Abstützteils. Um dies zu realisieren, ist das Abstützteil bevorzugt dazu ausgebildet, in einer Mehrzahl von Punkten mit dem Zugfahrzeug verbunden zu werden. Insbesondere kann eine Verbindung mit einem Hubwerk des Zugfahrzeugs vorgesehen sein, zum Beispiel mit einem Dreipunkt-Hubwerk. Das Abstützteil ist bevorzugt in sich starr ausgebildet, könnte aber aus einer Mehrzahl starr verbundener Einzelelemente bestehen.

Der Deichselausleger ist wenigstens indirekt mit dem Abstützteil verbunden. Das heißt entweder ist er direkt mit dem Abstützteil verbunden oder aber über wenigstens ein zwischengeordnetes weiteres Element. Dabei ist er gegenüber dem Abstützteil, also relativ zu diesem, um eine vordere Deichselachse schwenkbar. Die vordere Deichselachse verläuft bevorzugt wenigstens überwiegend vertikal, also zum Beispiel in einem Winkel von weniger als 20° zur Wirkrichtung der Schwerkraft oder zu einer Hochachse des Zugfahrzeugs, bezogen auf den bestimmungsgemäß angekoppelten Zustand der Deichseleinheit. Der Begriff "vordere Deichselachse" ist nicht dahingehend auszulegen, dass das Verbindungssystem zwangsläufig eine hintere Deichselachse aufweisen muss. Durch die Schwenkbarkeit kann der Deichselausleger also in verschiedene horizontale Richtungen relativ zum Abstützteil sowie zum Zugfahrzeug ausgerichtet werden. Der Deichselausleger kann wenigstens überwiegend gerade ausgebildet sein. Bevorzugt ist er langgestreckt ausgebildet, weist also eine Dimension ("Länge") auf, die wenigstens zweimal, wenigstens fünfmal oder wenigstens zehnmal größer sein kann als die anderen Dimensionen ("Breite", "Höhe"). Er ist in sich bevorzugt starr ausgebildet. Insbesondere ist er dazu ausgebildet, Zug- und Druckkräfte zwischen dem Zugfahrzeug und der Landmaschine zu übertragen.

Am Deichselausleger ist wenigstens ein Kopplungselement zur wenigstens indirekten Ankopplung an die Landmaschine angeordnet. Das Kopplungselement kann Teil des Deichselauslegers sein oder mit diesem verbunden sein. Es kann sich um eine starre oder eine bewegliche Verbindung handeln. Das wenigstens eine Kopplungselement ist dazu eingerichtet, den Deichselausleger, und somit die Deichseleinheit und das Zugfahrzeug, wenigstens indirekt an die Landmaschine zu koppeln. Die Kopplung beruht bevorzugt wenigstens teilweise auf einem Formschluss. Sie kann direkt mit der Landmaschine gegeben sein oder mit einem zwischengeordneten Element, das seinerseits an die Landmaschine gekoppelt ist.

Das erfindungsgemäße Verbindungssystem ermöglicht somit bei einer Straßenfahrt eine Verbindung ähnlich einer permanent mit der Landmaschine verbundenen Deichsel. Allerdings ist auf Seite der Landmaschine keine Deichsel notwendig, da die Verbindung wenigstens teilweise durch den schwenkbaren Deichselausleger hergestellt wird. Dabei kann für die Feldbearbeitung zumindest ein Teil des Verbindungssystems von der Landmaschine getrennt werden und kann am Zugfahrzeug verbleiben. Die Deichseleinheit ist dort nach wie vor über das Abstützteil angekoppelt und abgestützt, muss also nicht abgenommen und verstaut werden. Somit werden die mit einer permanent an der Landmaschine angeordneten Deichsel verbundenen Nachteile, insbesondere für den Einsatz eines Feldbearbeitungsgeräts, beim erfindungsgemäßen Verbindungssystem vermieden, ebenso wie die Nachteile einer abnehmbaren Zugstange.

Besonders bevorzugt weist das Verbindungssystem ein Deichselelement auf, welches für eine um eine hintere Deichselachse schwenkbare, wenigstens indirekte Verbindung mit einem Rahmen der Landmaschine eingerichtet ist, wobei am Deichselausleger und am Deichselelement miteinander korrespondierende Kopplungselemente angeordnet sind, die dazu eingerichtet sind, in einer Arretierungsposition den Deichselausleger und das Deichselelement wenigstens translatorisch zu koppeln, wenn diese in einer Kopplungsposition zueinander angeordnet sind, wobei wenigstens ein Kopplungselement in eine Freigabeposition verstellbar ist, um den Deichselausleger vom Deichselelement zu lösen.

Das Deichselelement ist für eine um eine hintere Deichselachse schwenkbare, wenigstens indirekte Verbindung mit einem Rahmen der Landmaschine eingerichtet. Ein derartiger Rahmen ist in aller Regel starr ausgebildet, wobei er aus einer Mehrzahl starr verbundener Einzelelemente bestehen kann. Er bildet eine mechanisch stabile Basis, an welcher weitere Komponenten der Landmaschine angeordnet sein können. Namentlich können am Rahmen wenigstens eine Vorderachse und eine Hinterachse angeordnet sein. Im Fall einer autonomen Landmaschine sind vorteilhaft beide Achsen lenkbar. Das Deichselelement kann ein Schwenklager oder zumindest eine Aufnahme für ein Schwenklager aufweisen, durch welches die Schwenkbarkeit gegenüber dem Rahmen realisiert wird. Es kann in montiertem Zustand direkt mit dem Rahmen verbunden sein oder mit einem zwischengeordneten Element (zum Beispiel der Vorderachse), welches seinerseits mit dem Rahmen verbunden ist. Dies schließt auch die Möglichkeit ein, dass das Deichselelement mit dem zwischengeordneten Element starr verbunden ist, während das zwischengeordnete Element schwenkbar mit dem Rahmen verbunden ist. In diesem Fall können aber auch beide Elemente gemeinsam als "Deichselelement" im Sinne dieser Ausführungsform angesehen werden. Wie die vordere Deichselachse verläuft auch die hintere Deichselachse bevorzugt wenigstens überwiegend vertikal, also zum Beispiel in einem Winkel von weniger als 20° zur Wirkrichtung der Schwerkraft oder zu einer Hochachse der Landmaschine, bezogen auf den mit dem Rahmen verbunden Zustand des Deichselelements. Bevorzugt ist vorgesehen, dass das Deichselelement auf Dauer mit dem Rahmen verbunden ist, entweder direkt oder indirekt. Man kann den Rahmen der Landmaschine oder die Landmaschine insgesamt als Teil des Verbindungssystems ansehen. In diesem Fall kann man auch sagen, dass das Deichselelement um die hintere Deichselachse schwenkbar mit dem Rahmen der Landmaschine verbunden ist. Insbesondere kann das Deichselelement um die hintere Deichselachse schwenkbar am Rahmen gelagert sein. Das Deichselelement ist bevorzugt in sich starr ausgebildet. Es ist ebenfalls dazu ausgebildet, Zug- und Druckkräfte zwischen dem Zugfahrzeug und der Landmaschine zu übertragen. Wenngleich keine grundsätzlichen Beschränkungen diesbezüglich bestehen, kann das Deichselelement wesentlich kürzer ausgebildet sein als der Deichselausleger. Zum Beispiel kann eine größte Abmessung des Deichselelements höchstens 50% oder höchstens 30% einer größten Abmessung des Deichselauslegers entsprechen.

Am Deichselausleger und am Deichselelement sind miteinander korrespondierende Kopplungselemente angeordnet, die dazu eingerichtet sind, in einer Arretierungsposition den Deichselausleger und das Deichselelement wenigstens translatorisch zu koppeln, wenn diese in einer Kopplungsposition zueinander angeordnet sind, wobei wenigstens ein Kopplungselement in eine Freigabeposition verstellbar ist, um den Deichselausleger vom Deichselelement zu lösen. Es ist wenigstens ein Kopplungselement am Deichselausleger angeordnet und wenigstens ein hiermit korrespondierendes Kopplungselement ist am Deichselelement angeordnet. "Korrespondierend" bedeutet, dass diese Kopplungselemente dazu eingerichtet sind, miteinander zusammenzuwirken. Das Zusammenwirken dient dazu, den Deichselausleger und das Deichselelement aneinander zu koppeln. Genauer gesagt, werden diese translatorisch gekoppelt, wenn sie in einer Kopplungsposition zueinander angeordnet sind und wenn die Kopplungselemente in einer Arretierungsposition sind. In translatorisch gekoppeltem Zustand sind translatorische Relativbewegungen zwischen Deichselausleger und Deichselelement höchstens eigeschränkt möglich, was sich auf alle drei Dimensionen bezieht. Insbesondere können Deichselausleger und Deichselelement translatorisch gegeneinander arretiert sein, so dass keine nennenswerten Relativbewegungen zwischen Deichselausleger und Deichselelement mehr möglich sind. Wenngleich eine translatorische Arretierung bevorzugt ist, ist der Begriff "Arretierungsposition" diesbezüglich nicht einschränkend auszulegen. Auch wenn keine translatorischen Freiheitsgrade bestehen, kann wenigstens ein rotatorischer Freiheitsgrad gegeben sein, insbesondere genau ein rotatorischer Freiheitsgrad. Bevorzugt ist eine wenigstens teilweise rotatorische Arretierung gegeben, das heißt die Zahl der rotatorischen Freiheitsgrade ist reduziert auf maximal zwei Freiheitsgrade. Deichselausleger und Deichselelement können um eine Kopplungs-Schwenkachse gegeneinander schwenkbar sein, die durch die Kopplungselemente definiert sein kann. So können die Kopplungselemente so ausgebildet sein, dass sie in der Arretierungsposition keinen tangentialen Formschluss bezüglich der Kopplungs-Schwenkachse bilden. Die Kopplungs-Schwenkachse verläuft bevorzugt wenigstens anteilig horizontal. Fehlt ein rotatorischer Freiheitsgrad, so verhalten sich Deichselausleger und Deichselelement wie ein einziger starrer Körper. Auch wenn der rotatorische Freiheitgrad gegeben ist, bilden sie gewissermaßen gemeinsam eine Deichsel, die das Zugfahrzeug mit der Landmaschine verbindet. Diese Deichsel ist einerseits um die vordere Deichselachse und andererseits um die hintere Deichselachse schwenkbar. Hierdurch sind bevorzugt Relativbewegungen innerhalb der horizontalen Ebene möglich. Sofern die Kopplungs-Schwenkachse wenigstens anteilig horizontal verläuft, sind auch Relativbewegungen in vertikaler Richtung möglich. Es versteht sich, dass sich der Deichselausleger zumindest in angekoppeltem Zustand wenigstens überwiegend horizontal erstreckt. Gleiches gilt für die aus Deichselausleger und Deichselelement gebildete Deichsel.

Wenigstens ein Kopplungselement ist in eine Freigabeposition verstellbar, um den Deichselausleger vom Deichselelement zu lösen. Das entsprechende Kopplungselement ist also zwischen der Arretierungsposition und der Freigabeposition verstellbar, zum Beispiel verschwenkbar und/oder verschiebbar. Die Verbindung zwischen dem Deichselausleger und dem Deichselelement ist somit nicht permanent, sondern kann bei Bedarf wieder getrennt werden. Dies kann insbesondere bei einer autonomen Landmaschine nach Beendigung der Straßenfahrt erfolgen. Dabei wird ein Teil, bevorzugt der größere Teil, des Verbindungssystems von der Landmaschine getrennt und kann am Zugfahrzeug verbleiben. Dieser Teil, nämlich die Deichseleinheit, ist dort nach wie vor über das Abstützteil angekoppelt und abgestützt, muss also nicht abgenommen und verstaut werden. Ein anderer Teil, bevorzugt der kleinere Teil, kann an der Landmaschine verbleiben. Das entsprechende Deichselelement kann so klein ausgestaltet sein, dass es zum Beispiel den Einsatz eines Feldbearbeitungsgeräts nicht stört. Trotzdem könnte über ein schwenkbar am Rahmen gelagertes Deichselelement ein Drehmoment übertragen werden, wodurch zum Beispiel eine Zwangslenkung einer Achse realisierbar ist. Das Deichselelement kann mechanisch mit einem Element der Achse verbunden sein, zum Beispiel über eine Spurstange mit einem Achsschenkel.

Eine bevorzugte Ausgestaltung sieht vor, dass wenigstens ein erstes Anschlag-Kopplungselement starr mit dem Deichselelement verbunden ist und wenigstens ein zweites Anschlag-Kopplungselement starr mit dem Deichselausleger verbunden ist und in der Kopplungsposition einen Formschluss mit dem wenigstens einen ersten Kopplungselement bildet, wobei wenigstens ein Stell-Kopplungselement zwischen der Arretierungsposition und der Freigabeposition verstellbar ist. Das heißt sowohl mit dem Deichselelement als auch mit dem Deichselausleger ist jeweils wenigstens ein Kopplungselement starr verbunden, welches als (erstes oder zweites) Anschlag-Kopplungselement bezeichnet wird. Der Formschluss zwischen den Anschlag-Kopplungselementen kann die Kopplungsposition wenigstens einseitig definieren, das heißt er kann eine Bewegung über die Kopplungsposition hinaus verhindern. Andererseits ist der Formschluss nicht vollständig, das heißt es ist eine Relativbewegung möglich, solange nicht das Stell-Kopplungselement in die Arretierungsposition verstellt ist. Gemäß einer Ausgestaltung wird die Zugkraft zwischen Zugfahrzeug und Landmaschine wenigstens teilweise über die Anschlag-Kopplungselemente übertragen.

Eine Möglichkeit besteht darin, dass ein Stell-Kopplungselement mit dem Deichselelement verbunden ist. Andererseits kann es vorteilhaft sein, den Aufbau der Landmaschine im Bereich des Deichselelements einfach zu halten und dort kein bewegliches Teil vorzusehen. Gemäß einer vorteilhaften Ausführungsform ist wenigstens ein Stell-Kopplungselement verstellbar mit dem Deichselausleger verbunden und in der Arretierungsposition ist wenigstens ein erstes Anschlag-Kopplungselement zwischen einem Stell-Kopplungselement und einem zweiten Anschlag-Kopplungselement formschlüssig aufgenommen. Das verstellbare Stell-Kopplungselement wird also der Deichseleinheit zugeordnet, wodurch der Aufbau im Bereich des Deichselelements einfach bleibt. Auch kann eine nachfolgend noch besprochene Fernbedienung des Stell-Kopplungselements am Deichselausleger leichter realisiert werden als am Deichselelement. Das Stell-Kopplungselement kann insbesondere schwenkbar mit dem Deichselausleger verbunden sein, allerdings wäre auch eine translatorische Verstellbarkeit denkbar, zum Beispiel nach Art eines Schiebers. Wenn das Stell-Kopplungselement die Arretierungsposition erreicht hat, schließt es zusammen mit einem ersten Anschlag-Kopplungselement das zweite Anschlag-Kopplungselement formschlüssig ein, wodurch es bevorzugt wenigstens translatorisch arretiert ist. Dabei kann das weite Anschlag-Kopplungselement sowohl mit dem Stell-Kopplungselement als auch mit dem ersten Anschlag-Kopplungselement in Kontakt stehen.

Gemäß einer Ausführungsform sind der Deichselausleger und das Deichselelement in einer wenigstens anteilig horizontalen Kopplungsrichtung in die Kopplungsposition führbar, wobei die Anschlag-Kopplungselemente in der Kopplungsposition wenigstens in Kopplungsrichtung einen Formschluss bilden. Die Kopplungsvorrichtung kann dabei als Bewegungsrichtung des Deichselauslegers relativ zum Deichselelement definiert sein. In der entsprechenden Kopplungsvorrichtung können sich die beiden Elemente bis in die Kopplungsposition bewegen, ohne miteinander zu kollidieren. In einigen Ausführungsformen kann die Bewegung in die Kopplungsposition wenigstens teilweise geführt sein. D. h. es können am Deichselausleger und am Deichselelement miteinander zusammenwirkende Führungsstrukturen angeordnet sein. In der Kopplungsposition bilden die ersten und zweiten Anschlag-Kopplungselemente miteinander einen Formschluss, was sich zumindest auf die Kopplungsvorrichtung bezieht. D. h., sie bilden miteinander einen Anschlag, der eine weitere Bewegung in der Kopplungsvorrichtung verhindert. Die Kopplungsvorrichtung verläuft wenigstens anteilig horizontal und kann insbesondere in einem Winkel von weniger als 20° zur horizontalen Ebene verlaufen. In einigen Ausführungsformen kann durch den Formschluss der Anschlag-Kopplungselemente auch eine Zugkraft zwischen dem Deichselausleger und dem Deichselelement übertragen werden.

Eine Ausgestaltung sieht vor, dass das Verbindungssystem gegenüber dem Deichselelement stationäre erste Führungsflächen und gegenüber dem Deichselausleger stationäre zweite Führungsflächen aufweist, welche zwischen sich einen Spielraum quer zur Kopplungsrichtung definieren, wobei wenigstens eine Führungsfläche wenigstens bereichsweise derart gegenüber der Kopplungsrichtung abgeschrägt ist, dass sich der Spielraum bei Annäherung an die Kopplungsposition verringert. Die ersten Führungsflächen können am Deichselelement selbst ausgebildet sein oder an einem stationär mit diesem verbundenen Bauteil, zum Beispiel einem ersten Anschlag-Kopplungselement. Ebenso können die zweiten Führungsflächen am Deichselelement selbst ausgebildet sein oder an einem stationär mit diesem verbundenen Bauteil, zum Beispiel einem zweiten Anschlag-Kopplungselement. Durch ihre Dimensionen und/oder ihre Anordnung zueinander definieren die Führungsflächen einen Spielraum quer zur Kopplungsrichtung. Dies ist der Raum für eine mögliche Relativbewegung zwischen Deichselausleger und Deichselelement. Wenn die Führungsflächen aneinander anliegen, ist der Spielraum gleich Null. Wenn Deichselausleger und Deichselelement noch von der Kopplungsposition entfernt sind, ist es vorteilhaft, wenn der Spielraum eine gewisse Größe hat, wodurch der Ankopplungsvorgang in dieser Phase erleichtert wird. Spätestens bei Erreichen der Ankopplungsposition sollte der Spielraum minimal, also nahezu gleich Null sein, da die Relativposition von Deichselelement und Deichselausleger hier exakt definiert sein sollte. Indem wenigstens eine Führungsfläche gegenüber der Kopplungsrichtung abgeschrägt ist, verringert sich der Spielraum nach und nach in Richtung auf die Kopplungsposition. Das heißt die beteiligten Elemente werden in die korrekte Position hineingeführt. Es können Paare von Führungsflächen vorgesehen sein, die einander wangenartig gegenüberliegend angeordnet sind. Alternativ könnte auch eine einzige Führungsfläche nach Art eines Trichters ausgestaltet sein, zum Beispiel kegelförmig.

Vorteilhaft ist am Deichselausleger ein Verriegelungsmechanismus angeordnet, welcher das wenigstens eine Stell-Kopplungselement aufweist und durch den das wenigstens eine Stell-Kopplungselement fernbedienbar ist. Das heißt, der Verriegelungsmechanismus weist das Stell-Kopplungselement auf sowie zusätzlich wenigstens ein Element, durch welches die Fernbedienbarkeit realisiert wird. "Fernbedienbar" bedeutet hierbei im weitesten Sinne, dass ein Benutzer nicht direkt auf das Stell-Kopplungselement zugreifen muss. Es kann hinsichtlich der Bedienerfreundlichkeit schon einen wesentlichen Vorteil bedeuten, wenn der Benutzer in einem Bereich zugreifen muss, der beispielsweise um wenigstens 1 m vom Stell-Kopplungselement entfernt ist. Durch den gewonnenen Abstand kann er beispielsweise auch dann die Verstellung vornehmen, wenn an der Landmaschine ein Anbaugerät angekoppelt ist, welches oberhalb des Deichselauslegers angeordnet ist.

Gemäß einer Ausführungsform weist der Verriegelungsmechanismus einen schwenkbar am Deichselausleger angeordneten Bedienhebel auf, der im Abstand zum wenigstens einen Stell-Kopplungselement angeordnet und kraftübertragend mit diesem verbunden ist, insbesondere über wenigstens eine Koppelstange. Durch Schwenken des Bedienhebels ist das wenigstens eine Stell-Kopplungselement zwischen der Freigabeposition und der Arretierungsposition verstellbar, beispielsweise ebenfalls schwenkbar. Die Kraftübertragung könnte prinzipiell hydraulisch erfolgen. Aus Gründen der Einfachheit und Robustheit ist eine mechanische Kraftübertragung bevorzugt. Insbesondere kann wenigstens eine Koppelstange zwischen dem Bedienhebel und dem Stell-Kopplungselement zwischengeordnet sein. Sie kann beiderseits schwenkbar angebunden sein. Sofern das Stell-Kopplungselement ebenfalls schwenkbar ist, bilden die beteiligten Schwenkachsen ein Viereck. Falls sich der Abstand der Schwenkachsen der Koppelstange vom Abstand der Schwenkachsen des Bedienhebels und des Stell-Kopplungselements unterscheidet, ist ein Wechsel zwischen der Arretierungsposition und der Freigabeposition unter Umständen nur unter elastischer Verformung der beteiligten Elemente möglich. Dabei kann sich zwischen den genannten Positionen ein instabiler Punkt ergeben, der nur durch ein entsprechendes Drehmoment im Bedienhebel überwunden werden kann. Aus der elastischen Verformung ergibt sich eine Rückstellkraft, so dass der Verriegelungsmechanismus bei geringer Auslenkung aus einer der Positionen selbstständig in diese Position zurückkehrt. Hierdurch kann insbesondere die Arretierungsposition zusätzlich gesichert werden.

Um das Ankoppeln ebenso wie das Entkoppeln von Deichselausleger und Deichselelement zu erleichtern, ist es bevorzugt, dass das wenigstens eine Stell-Kopplungselement durch den Verriegelungsmechanismus aktorisch verstellbar ist. D. h., der Verriegelungsmechanismus weist wenigstens einen Aktor auf, durch welchen die entsprechende Verstellung möglich ist. Der Aktor, welcher beispielsweise als Hydraulikzylinder ausgebildet sein kann, kann bevorzugt von der Zugmaschine aus gesteuert werden. Ein entsprechender Aktor könnte an einem oben genannten Bedienhebel angreifen, der Verriegelungsmechanismus könnte allerdings auch völlig anders ausgestaltet sein.

Eine Möglichkeit besteht darin, dass wenigstens ein Stell-Kopplungselement als Rastelement ausgebildet ist, welches dazu eingerichtet ist, bei Annäherung an die Kopplungsposition entgegen einer Rückstellkraft elastisch aus der Verriegelungsposition ausgelenkt zu werden und bei Erreichen der Kopplungsposition der Rückstellkraft folgend in die Verriegelungsposition zurückzukehren. Das stell-Kopplungselement kann dabei zum Beispiel mit einem ersten Anschlag-Kopplungselement zusammenwirken und durch dieses aus der Verriegelungsposition ausgelenkt werden. Die Form der beiden Elemente kann so aufeinander abgestimmt sein, dass bei Erreichen der Kopplungsposition die Auslenkung beendet wird und das Stell-Kopplungselement in die Verriegelungsposition zurückkehrt. Man kann von einem Einrasten des Stell-Kopplungselements sprechen.

Bei verschiedenen Ausführungsformen ragt der Deichselausleger horizontal weit vom Zugfahrzeug ab, wenn die Deichseleinheit an dieses angekoppelt ist. Solange die Verbindung zum Deichselelement der Landmaschine hergestellt ist, ist die entsprechende Länge des Deichselauslegers ein Vorteil, da hierdurch beispielsweise beim Durchfahren enger Kurven ein ausreichender Abstand zwischen den kurveninneren Rädern von Zugfahrzeug und Landmaschine gewährleistet ist. Sobald die Landmaschine abgekoppelt ist, bedeutet der weit abragende Deichselausleger am Zugfahrzeug allerdings einen Nachteil, insbesondere im Hinblick auf eine mögliche Teilnahme am Straßenverkehr. Bevorzugt ist daher vorgesehen, dass der Deichselausleger um eine wenigstens anteilig horizontale Aufstellachse gegenüber dem Abstützteil schwenkbar ist zwischen einer Zugposition und einer Aufstellposition, wobei er bevorzugt aktorisch um die Aufstellachse schwenkbar ist. Die Zugposition ist normalerweise eine wenigstens näherungsweise waagerechte Position und entspricht einer Position, in welcher der Deichselausleger an das Deichselelement angekoppelt ist oder zumindest angekoppelt sein kann. Die Aufstellposition kann insbesondere eine annähernd senkrechte Position sein. D. h., das Schwenken zwischen der Zugposition und der Aufstellposition kann um einen Winkel von beispielsweise zwischen 70° und 110°, insbesondere zwischen 80° und 100° erfolgen. Wenn sich der Deichselausleger in der Aufstellposition befindet, kann das Zugfahrzeug je nach Ausführungsform ohne Weiteres am Straßenverkehr teilnehmen. Die Aufstellachse verläuft bevorzugt horizontal, beispielsweise parallel zu einer Querachse des Zugfahrzeugs. Wenngleich eine manuelle Verstellung des Deichselauslegers denkbar ist, ist es bevorzugt, dass er aktorisch schwenkbar ist. Dies kann beispielsweise mittels eines Hydraulikzylinders erfolgen, der vom Zugfahrzeug aus gesteuert werden kann.

Der Deichselausleger könnte unmittelbar mit dem Abstützteil verbunden sein. Dies würde es allerdings erschweren, sowohl die Schwenkbarkeit um die vordere Deichselachse als auch die Schwenkbarkeit um die Aufstellachse zu realisieren. Eine vorteilhafte Ausgestaltung sieht vor, dass die Deichseleinheit ein mit dem Abstützteil um die vordere Deichselachse schwenkbar verbundenes Schwenkteil aufweist, mit welchem der Deichselausleger um die Aufstellachse schwenkbar verbunden ist. Das heißt der Schwenkteil kann zusammen mit dem Deichselausleger um die vordere Deichselachse geschwenkt werden. Zusätzlich kann der Deichselausleger gegenüber dem Schwenkteil und dem Abstützteil um die Aufstellachse geschwenkt werden. Deren Ausrichtung gegenüber dem Abstützteil hängt natürlich von der aktuellen Schwenkposition des Schwenkteils ab.

Optional kann der Deichselausleger gegenüber dem Abstützteil um eine weitere Schwenkachse schwenkbar sein, die zumindest in einigen Ausführungsformen als Pendel-Schwenkachse oder Roll-Schwenkachse bezeichnet werden kann. Sie verläuft bevorzugt in einem Winkel von 80° bis 100°, insbesondere 90°, zur Aufstellachse. Weiterhin verläuft sie bevorzugt wenigstens in der Zugposition des Deichselausleger in einem Winkel zwischen 70° und 100°, insbesondere 80° bis 100°, zur horizontalen Ebene. Die genannte Schwenkachse kann insbesondere wenigstens in der Zugposition parallel zu einer Längsachse des Deichselauslegers verlaufen. Durch diese zusätzliche Schwenkachse können rotatorische Relativbewegungen um die Längsachse des Zugfahrzeugs und/oder um die Längsachse der Landmaschine ausgeglichen werden. Man kann dies auch als Rollbewegung oder Bewegung um eine Rollachse bezeichnen. Um die Schwenkbarkeit zu realisieren, könnte der Abstützteil, der Schwenkteil und/oder der Deichselausleger durch zwei gegeneinander schwenkbare Teile ersetzt werden.

Im normalen Fahrbetrieb sollte der Deichselausleger frei um die vordere Deichselachse schwenkbar sein. Für den Ankopplungsvorgang kann es sinnvoll sein, wenn der Deichselausleger bezüglich der vorderen Deichselachse relativ zum Abstützteil in einer Mittelposition zurückhaltbar ist. Die Mittelposition ist dabei bevorzugt eine Position, in welcher der Deichselausleger parallel zur Längsachse des Zugfahrzeugs ausgerichtet ist. "Zurückhaltbar" kann insbesondere "arretierbar" bedeuten, es kann sich aber auch auf ein elastisches Zurückhalten beziehen. In letzterem Fall ist durch äußere Drehmomente eine Auslenkung aus der Mittelposition möglich, allerdings entgegen eines Rückstellmoments, welches die Auslenkung begrenzt und für eine Rückstellung in die Mittelposition sorgt. Der Vorteil einer entsprechenden Arretierung oder elastischen Rückhaltung ist, dass der Deichselausleger durch Ausrichtung des Zugfahrzeugs ausgerichtet werden kann. Das heißt es ist über Lenkung und Fahrantrieb des Zugfahrzeugs eine zumindest ausreichend präzise Möglichkeit gegeben, den Deichselausleger in eine vorgesehene Position zu bringen, zum Beispiel in die Kopplungsposition. Sofern der Deichselausleger über das oben genannte Schwenkteil mit dem Abstützteil verbunden ist, ist bei dieser Ausführungsform das Schwenkteil gegenüber dem Abstützteil rückhaltbar, woraus die Rückhaltung des Deichselauslegers bezüglich der vorderen Schwenkachse resultiert. Bevorzugt ist der Deichselausleger aktorisch in die Mittelposition führbar und/oder aktorisch in der Mittelposition rückhaltbar. Das heißt es ist wenigstens ein Aktor vorgesehen, der den Deichselausleger (oder das Schwenkteil einschließlich des Deichselauslegers) aus einer zum Beispiel seitwärts geschwenkten Position in die Mittelposition führt. Alternativ oder zusätzlich kann ein Aktor dazu eingerichtet sein, den Deichselausleger in der Mittelposition rückzuhalten. Dabei kann es sich um ein und denselben Aktor handeln. Ein Arretieraktor, zum Beispiel ein hydraulischer Arretierzylinder, kann ein Arretierungselement in einen tangentialen Formschluss mit einer Rückhaltestruktur bringen. Dabei kann der Arretieraktor am Deichselausleger oder am Schwenkteil angeordnet sein und die Rückhaltestruktur am Abstützteil. Auch die umgekehrte Zuordnung wäre möglich. Die Rückhaltestruktur könnte durch eine Kurvenbahn gebildet sein, deren Kontur zu einem Bereich radial zurückweicht, in welchem das Arretierungselement in der Mittelposition angeordnet ist. Wird das Arretierungselement gegen die Kurvenbahn gedrückt, resultiert ein Drehmoment um die vordere Deichselachse, durch welches der Deichselausleger in die Mittelposition geführt wird.

Das Verbindungssystem kann wenigstens einen Überwachungssensor aufweisen, welcher dazu eingerichtet ist, eine Annäherung an die Kopplungsposition zu überwachen. Das heißt mittels des Überwachungssensors kann überwacht werden, ob und gegebenenfalls wie eine Annäherung an die Kopplungsposition erfolgt. Die vom Überwachungssensor gelieferten Daten können entweder einem Benutzer, zum Beispiel dem Fahrer des Zugfahrzeugs, zur Verfügung gestellt werden, oder sie könnten auch von einem autonomen System genutzt werden, das den Ankopplungsvorgang ganz oder teilweise automatisch durchführt. Insbesondere kann ein Überwachungssensor als Kamera ausgebildet sein. Die Kamera kann an der Deichseleinheit angeordnet sein, zum Beispiel am Stützteil oder am Deichselausleger, gegebenenfalls aber auch am Schwenkteil, soweit vorhanden. Auch eine Anordnung am Deichselelement ist denkbar. In jedem Fall sollte der Überwachungssensor einen Bereich erfassen, in dem während des Ankopplungsvorgangs wenigstens ein Kopplungselement angeordnet ist. Bei unmittelbarer Annäherung an die Kopplungsposition können in dem Bereich sämtliche Kopplungselement angeordnet sein. Im Falle einer Kamera bedeutet die Erfassung des Bereichs natürlich, dass der Bereich im Sichtfeld der Kamera ist.

Vorteilhaft weist das Verbindungssystem wenigstens einen Kopplungssensor auf, welcher dazu eingerichtet ist, das Erreichen der Arretierungsposition festzustellen und ein Arretierungssignal an eine Steuereinheit der Landmaschine zu senden. Sofern die Kopplungsposition erreicht wurde, zeigt das Erreichen der Arretierungsposition den erfolgreichen Abschluss des Kopplungsvorgangs an. Der Kopplungssensor kann in unterschiedlicher Weise die Arretierungsposition feststellen, gegebenenfalls auch berührungslos. Eine Möglichkeit besteht darin, dass der Kopplungssensor als einfacher Berührungssensor oder Schalter ausgebildet ist. Er könnte am ersten Anschlag-Kopplungselement angeordnet sein und bei Berührung durch das Stell-Kopplungselement aktiviert werden. Auf diese Weise wäre auch sichergestellt, dass er nicht ausgelöst wird, wenn das Stell-Kopplungselement die Arretierungsposition einnimmt, aber der Deichselausleger und das Deichselelement nicht in der Kopplungsposition sind. Es sind aber auch verschiedene andere Anordnungen für den Kopplungssensor möglich. Der Kopplungssensor kann zum Beispiel drahtgebunden mit der Steuereinheit verbunden sein. Auch könnte er mit einer drahtlosen Schnittstelle verbunden sein, die das Arretierungssignal drahtlos an eine der Steuereinheit zugeordnete Schnittstelle sendet. Die Steuereinheit der Landmaschine kann das Arretierungssignal empfangen und hieran erkennen, dass die Landmaschine nunmehr an das Zugfahrzeug gekoppelt ist.

Bei Empfang des Arretierungssignals kann die Steuereinheit der Landmaschine in unterschiedlicher Weise reagieren. Sie kann zum Beispiel ihrerseits über eine entsprechende Schnittstelle ein akustisches, optisches oder anderes Signal ausgeben lassen, das einen Benutzer auf den erfolgreichen Kopplungsvorgang hinweist. Sie kann auch über eine Schnittstelle die Information über den Kopplungsvorgang an das Zugfahrzeug oder an ein mobiles Gerät übermitteln. Insbesondere kann vorgesehen sein, dass die Steuereinheit dazu eingerichtet ist, bei Empfang des Arretierungssignals in einen für eine Straßenfahrt vorgesehenen Modus zu wechseln. Hierzu kann die Steuereinheit verschiedene Einstellungen an der Landmaschine vornehmen. Sie kann beispielsweise in einen Verzögerungslenkungsmodus wechseln, in welchem eine Hinterachse entgegengesetzt zur Vorderachse ausgelenkt wird, wenn ein Absolutbetrag einer Vorderachsen-Auslenkung eine Schwellwert überschreitet. Außerdem kann sie in einen Modus wechseln, in welchem die Vorderachse durch das Deichselelement zwangsgelenkt ist. Für die Feldbearbeitung kann die Steuereinheit dagegen einen Einzellenkungsmodus einstellen, in welchem sowohl die Vorderachse als auch die Hinterachse individuell gelenkt werden. Für die individuelle Lenkung kann die Steuereinheit Lenkaktoren ansteuern, die den Achsen zugeordnet sind.

Die Aufgabe wird weiterhin gelöst durch ein Verfahren zum Verbinden einer Landmaschine mit einem Zugfahrzeug, wobei eine Deichseleinheit, die ein Abstützteil aufweist sowie einen wenigstens indirekt mit dem Abstützteil verbundenen und gegenüber diesem um eine vordere Deichselachse schwenkbaren Deichselausleger, sich mit dem Abstützteil am Zugfahrzeug abstützt und wobei am Deichselausleger wenigstens ein Kopplungselement angeordnet ist, mittels dessen der Deichselausleger wenigstens indirekt an die Landmaschine angekoppelt wird. Zum Ankoppeln können sich das Zugfahrzeug mit der Deichseleinheit sowie die Landmaschine aneinander annähern, bis eine Kopplungsposition erreicht wird, in welcher der Deichselausleger wenigstens indirekt an die Landmaschine angekoppelt wird.

Die genannten Begriffe wurden bereits mit Bezug auf das erfindungsgemäße Verbindungssystem erläutert und werden daher nicht nochmals erklärt. Bevorzugte Ausführungsformen des erfindungsgemäßen Verfahrens entsprechen denen des erfindungsgemäßen Verbindungssystems.

Insbesondere kann ein Deichselelement um eine hintere Deichselachse schwenkbar, wenigstens indirekt mit einem Rahmen der Landmaschine verbunden sein, wobei am Deichselausleger und am Deichselelement miteinander korrespondierende Kopplungselemente angeordnet sind, wobei der Deichselausleger und das Deichselelement in einer Kopplungsposition angeordnet werden und mittels der Kopplungselemente wenigstens translatorisch gekoppelt werden, wozu wenigstens ein Kopplungselement aus einer Freigabeposition zum Lösen des Deichselauslegers vom Deichselelement in eine Arretierungsposition verstellt wird.

Zum Entkoppeln der Landmaschine vom Zugfahrzeug kann wenigstens ein Kopplungselement aus der Arretierungsposition in die Freigabeposition verstellt werden, wonach die Deichseleinheit und das Deichselelement aus der Kopplungsposition herausbewegt werden. Hierzu können das Zugfahrzeug und/oder die Landmaschine bewegt, insbesondere gefahren werden.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Untersicht einer Landmaschine mit Teilen eines erfindungsgemäßen Verbindungssystems in einem ersten Zustand;
- Fig. 2: eine Untersicht der Landmaschine mit Teilen des Verbindungssystems in einem zweiten Zustand;
- Fig. 3: ein Diagramm einer Übertragungseinrichtung der Landmaschine aus Fig. 1 in einem Verzögerungslenkungsmodus;
- Fig. 4: ein Diagramm der Übertragungseinrichtung aus Fig. 3 in einem Einzellenkungsmodus;
- Fig. 5: eine Seitenansicht eines Teils der Landmaschine aus Fig. 1, eines Zugfahrzeugs sowie des diese verbindenden Verbindungssystems;
- Fig. 6: eine perspektivische Detailansicht des Verbindungssystems aus Fig. 5;
- Fig. 7: eine perspektivische Ansicht des Verbindungssystems aus Fig. 5 in einem ersten Zustand; sowie
- Fig. 8: eine perspektivische Ansicht des Verbindungssystems aus Fig. 5 in einem zweiten Zustand.

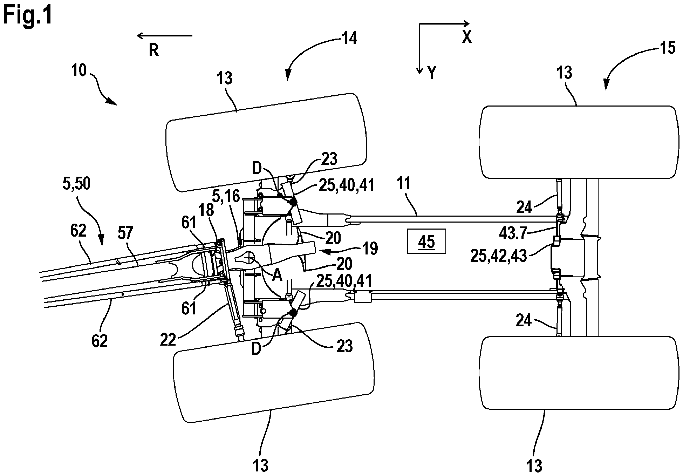

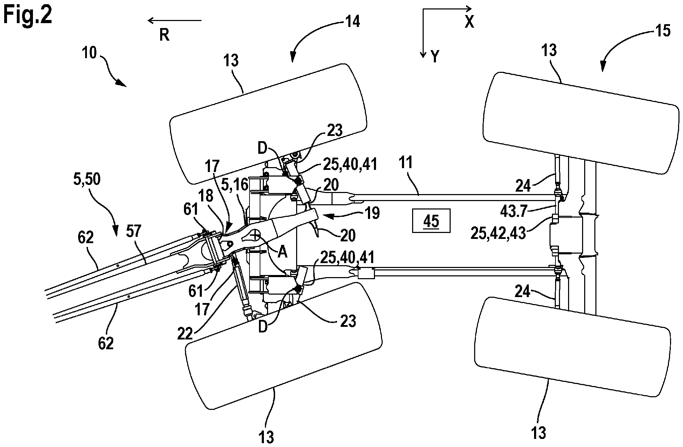

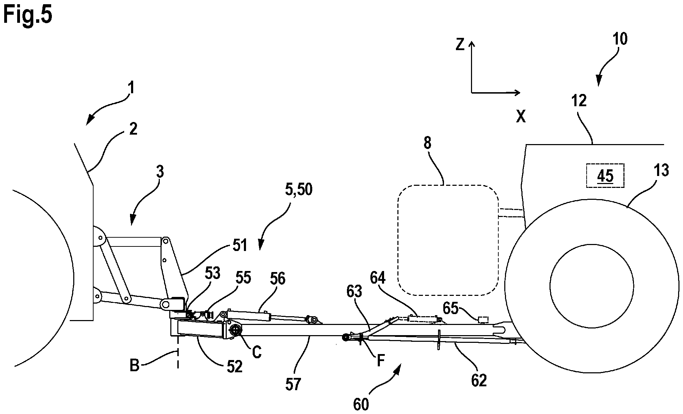

Fig. 1 und 2 zeigen Untersichten einer Landmaschine 10, welche in diesem Beispiel als autonomes Fahrzeug ausgebildet ist. Hier und im Folgenden sind eine Längsachse X, eine Querachse Y sowie eine Hochachse Z der Landmaschine 10 eingezeichnet, ebenso wie eine entgegengesetzt zur Längsachse X weisende Fahrtrichtung R. Zur Vereinfachung wurden verschiedene Teile der Landmaschine 10 weggelassen, insbesondere der Großteil eines Fahrzeugkörpers 12, welcher in Fig. 5 angedeutet ist. Erkennbar ist ein Rahmen 11, an dem eine lenkbare Vorderachse 14 sowie eine ebenfalls lenkbare Hinterachse 15 angeordnet sind, welche bezüglich der Fahrtrichtung R hinter der Vorderachse 14 angeordnet ist. Beide Achsen 14, 15 weisen jeweils zwei bezüglich der Querachse Y nebeneinander angeordnete Räder 13 auf. Jede Achse 14, 15 weist eine Achsschenkellenkung auf, wobei jeweils ein in den Figuren nicht sichtbarer Achsschenkel des jeweiligen Rades 13 über Spurstangen 23, 24 gelenkt wird. Vorderachsen-Spurstangen 23 sind an einen aus Übersichtlichkeitsgründen nicht dargestellten Vorderachsen-Lenkzylinder gekoppelt, während Hinterachsen-Spurstangen 24 mit einem Hinterachsen-Lenkzylinder 43 gekoppelt sind, genauer gesagt mit einer Lenkzylinder-Kolbenstange 43.7 desselben. Während der Feldbearbeitung werden beide Achsen 14, 15 in einem Einzellenkungsmodus betrieben, wobei eine Steuereinheit 45 mittels der jeweiligen Lenkzylinder 43 jede der Achsen 14, 15 situationsbedingt unabhängig voneinander lenken kann.

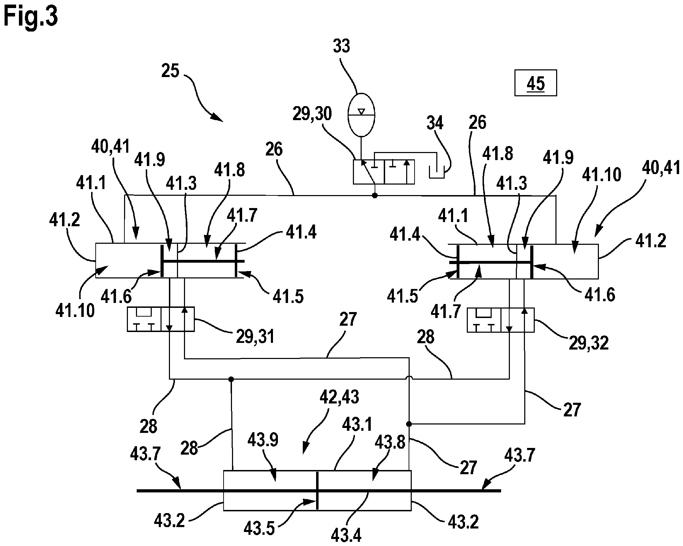

Am Rahmen 11 ist außerdem ein Deichselelement 16 angeordnet, welches um eine parallel zur Hochachse Z verlaufende erste oder hintere Deichselachse A schwenkbar ist. Es ist über eine gelenkig angebundene Deichsel-Spurstange 22 mit einem der Achsschenkel der Vorderachse 14 verbunden. Das Deichselelement 16 bildet zusammen mit einer Deichseleinheit 50, welche nachfolgend noch erläutert wird, einen Teil eines Verbindungssystems 5, über welches die Landmaschine 10 mit einem Zugfahrzeug 1 verbunden werden kann. Während einer Straßenfahrt, bei der die Landmaschine 10 vom Zugfahrzeug 1 gezogen wird, wird die Landmaschine 10 in einem Verzögerungslenkungsmodus betrieben. Dabei wird der Vorderachsen-Lenkzylinder passiv geschaltet und die Lenkung der Vorderachse wird aufgrund der Zwangskopplung über die Deichsel-Spurstange 22 vollständig durch die Auslenkung des Deichselelements 16 bestimmt. An einem bezüglich der Längsachse X rückwärtigen Ende weist das Deichselelement 16 ein Auslöseelement 19 mit zwei beiderseits abragenden Auslösefingern 20 auf. Jeder Auslösefinger 20 ist einem Auslösezylinder 41 zugeordnet, welcher zu einem Auslöseteil 40 einer Übertragungseinrichtung 25 gehört. Die Übertragungseinrichtung 25 dient dazu, Lenkbewegungen der Vorderachse 14 in bestimmter Weise auf die Hinterachse 15 zu übertragen. Beide Auslösezylinder 41 sind um senkrecht verlaufende Auslösezylinder-Schwenkachsen D schwenkbar mit dem Rahmen 11 verbunden. Der Hinterachsen-Lenkzylinder 43 bildet einen Lenkteil 42 der Übertragungsvorrichtung 25. Im Verzögerungslenkungsmodus sind die Auslösezylinder 41 und der Hinterachsen-Lenkzylinder 43 hydraulisch miteinander verbunden, wie anhand des Diagramms in Fig. 3 ersichtlich ist. Jeder Auslösezylinder 41 weist einen Zylinderkörper 41.1 auf, der an einem Ende eine Endwand 41.2 aufweist sowie außerdem eine Trennwand 41.3. Die Trennwand 41.3 wird von einer Auslösezylinder-Kolbenstange 41.7 eines Kolbenelements 41.4 durchquert.

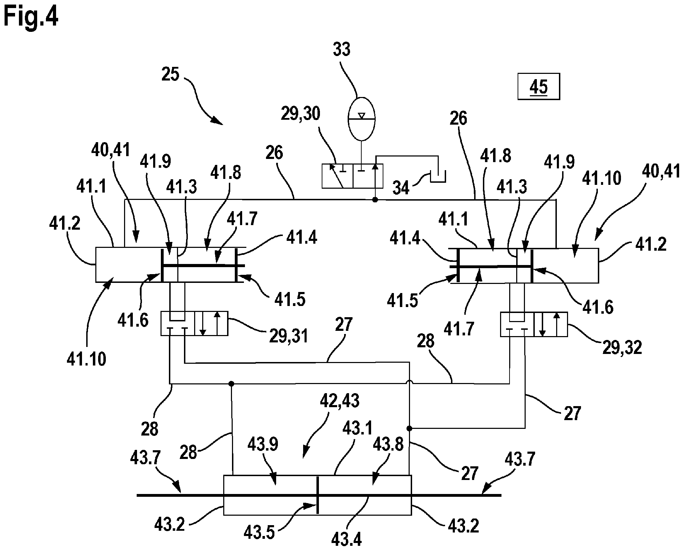

Das Kolbenelement 41.4 weist außerdem zwei Auslösezylinder-Kolbenteile 41.5, 41.6 auf, die durch die Auslösezylinder-Kolbenstange 41.7 starr verbunden sind. Zwischen der Trennwand 41.3 und dem ersten Auslösezylinder Kolbenteil 41.5 ist eine erste Auslösezylinder-Kammer 41.8 ausgebildet, während zwischen der Trennwand 41.3 und dem zweiten Auslösezylinder-Kolbenteil 41.6 eine zweite Auslösezylinder-Kammer 41.9 ausgebildet ist. Zwischen der Endwand 41.2 und dem zweiten Auslösezylinder-Kolbenteil 41.6 ist eine dritte Auslösezylinder-Kammer 41.10 ausgebildet. Die dritten Auslösezylinder-Kammern 41.10 sind mit einem ersten Hydraulikzweig 26 verbunden. Dieser ist im Verzögerungslenkungsmodus durch ein erstes Ventil 30 einer Ventilanordnung 29 mit einem Druckspeicher 33 verbunden. Hierdurch wird ein im Wesentlichen konstanter Hydraulikdruck in den dritten Auslösezylinder-Kammern 41.10 aufrechterhalten. Die erste Auslösezylinder-Kammer 41.8 des in Fig. 3 und 4 linken Auslösezylinders 41 ist über ein zweites Ventil 31 mit einem zweiten Hydraulikzweig 27 verbunden, während die zweite Auslösezylinder-Kammer 41.9 über das zweite Ventil 31 mit einem dritten Hydraulikzweig 28 verbunden ist. In ähnlicher Weise ist die erste Auslösezylinder-Kammer 41.8 des in Fig. 3 und 4 rechten Auslösezylinders 41 über ein drittes Ventil 32 mit dem dritten Hydraulikzweig 28 verbunden, während die zweite Auslösezylinder-Kammer 41.9 über das dritte Ventil 31 mit dem zweiten Hydraulikzweig 27 verbunden ist.

Der Hinterachsen-Lenkzylinder 43 weist einen Zylinderkörper 43.1 auf, der beiderseits durch Endwände 43.2 begrenzt ist. Durch die Endwände 43.2 ist die oben genannte Lenkzylinder-Kolbenstange 43.7 eines Kolbenelements 43.4 hindurchgeführt. Das Kolbenelement 43.4 weist ein starr mit der Lenkzylinder-Kolbenstange 43.7 verbundenes Lenkzylinder-Kolbenteil 43.5 auf. Zwischen Letztgenanntem und jeweils einer der Endwände 43.2 sind eine erste Lenkzylinder-Kammer 43.8 sowie eine zweite Lenkzylinder-Kammer 43.9 definiert. Die erste Lenkzylinder-Kammer 43.8 ist dauerhaft mit dem zweiten Hydraulikzweig 27 verbunden, während die zweite Lenkzylinder-Kammer 43.9 mit dem dritten Hydraulikzweig 28 verbunden ist. Wird das Kolbenelement 41.4 des linken Auslösezylinders 41 in Richtung der Endwand 41.2 ausgelenkt, vergrößert sich das Volumen der zweiten Auslösezylinder-Kammer 41.9, während sich das Volumen der ersten Auslösezylinder-Kammer 41.8 verringert. Dabei wird über den zweiten Hydraulikzweig 27 Hydraulikflüssigkeit verdrängt, während über den dritten Hydraulikzweig 28 Hydraulikflüssigkeit einströmt. Dementsprechend wird das Kolbenelement 43.4 des Hinterachsen-Lenkzylinders 43 bezogen auf Fig. 3 nach links ausgelenkt. In entsprechender Weise führt eine Auslenkung des Kolbenelements 41.4 des rechten Auslösezylinders 41 in Richtung der Endwand 41.2 dazu, dass das Kolbenelement 43.4 des Hinterachsen-Lenkzylinders 43 nach rechts ausgelenkt wird. Solange keine äußere Auslenkung eines der Kolbenelemente 41.3 erfolgt, werden diese aufgrund des Drucks in der dritten Auslösezylinder-Kammer 41.10 in einer Grundposition gehalten, welche auch als Grundposition der Auslösezylinder 41 bezeichnet werden kann. Aufgrund des symmetrischen Aufbaus der Übertragungseinrichtung 25 führt dies dazu, dass der Hinterachsen-Lenkzylinder 43 in einer Neutralposition gehalten wird, die einer Geradeausfahrt entspricht. D. h., solange keines der Kolbenelemente 41.3 der Auslösezylinder 41 aktiv ausgelenkt wird, verbleibt die Hinterachse 15 in einer Geradeausfahrt arretiert, was insbesondere bei hohen Geschwindigkeiten vorteilhaft ist.

Jeder der Auslösefinger 20 ist dazu ausgebildet, auf das Kolbenelement 41.4 eines der Auslösezylinder 41 einzuwirken, genauer gesagt dieses auf Seiten des ersten Auslösezylinder-Kolbenteils 41.5 mit Kraft zu beaufschlagen. Fig. 1 zeigt einen Zustand, bei dem ein Absolutbetrag einer Vorderachsen-Auslenkung der Vorderachse 14 unter einem bestimmten Schwellwert liegt, was insbesondere bei hohen Geschwindigkeiten typisch ist, da das Deichselelement 16 bei diesen Geschwindigkeiten meist nur wenig ausgelenkt wird. Ein Betrag eines Vorderachsen-Lenkwinkels kann zum Beispiel 8° betragen, während der Schwellwert 10° beträgt. Beide Auslösefinger 20 sind dabei außer Kontakt zu den Auslösezylindern 41, weshalb die Hinterachse 15 in ihrer Neutralposition verbleibt. Fig. 2 zeigt einen Zustand, bei welchem der Absolutbetrag der Vorderachsen-Auslenkung über dem Schwellwert liegt. Der Betrag des Vorderachsen-Lenkwinkels kann zum Beispiel 17° betragen. Einer der Auslösefinger 20 kontaktiert den ihm zugeordneten Auslösezylinder 41 und beaufschlagt somit das Kolbenelement 41.3 desselben. Dies führt wie oben beschrieben zu einer Auslenkung des Kolbenelements 43.3 des Hinterachsen-Lenkzylinders 43, wodurch über die Hinterachsen-Spurstangen 24 die Räder 13 der Hinterachse 15 entgegengesetzt zur Vorderachse 14 ausgelenkt werden.

Fig. 4 zeigt die Übertragungseinrichtung im Einzellenkungsmodus. Dabei ist der erste Hydraulikzweig 26 über das erste Ventil 29 mit einem drucklosen Tank 34 verbunden. Außerdem sind die erste Auslösezylinder-Kammer 41.8 und die zweite Auslösezylinder-Kammer 41.9 des linken Auslösezylinders 41 über das zweite Ventil 31 miteinander verbunden und gleichzeitig vom zweiten Hydraulikzweig 27 und vom dritten Hydraulikzweig 28 fluidisch getrennt. In gleicher Weise sind die erste Auslösezylinder-Kammer 41.8 und die zweite Auslösezylinder-Kammer 41.9 des rechten Auslösezylinders 41 über das dritte Ventil 32 miteinander verbunden und gleichzeitig vom zweiten Hydraulikzweig 27 und vom dritten Hydraulikzweig 28 fluidisch getrennt. Somit kann das Kolbenelement 41.4 jedes Auslösezylinders 41 frei verschoben werden und es erfolgt keine hydraulische Kraftübertragung auf den Hinterachsen-Lenkzylinder 43. Dieser kann über zusätzliche, in Fig. 3 und 4 nicht dargestellte Hydraulikleitungen beaufschlagt werden, um die Hinterachse 15 situationsgemäß auszulenken. Das Umschalten zwischen Verzögerungslenkungsmodus und Einzellenkungsmodus kann durch die Steuereinheit 45 erfolgen, ebenso wie die Steuerung der beiden Achsen 14, 15 im Einzellenkungsmodus. Gemäß einer in den Figuren nicht dargestellten Alternative kann jeder der Auslösezylinder 41 um die jeweilige Auslösezylinder-Schwenkachse D verschwenkt werden, so dass er im Einzellenkungsmodus nicht durch das Auslöseelement 19 beaufschlagt werden kann.

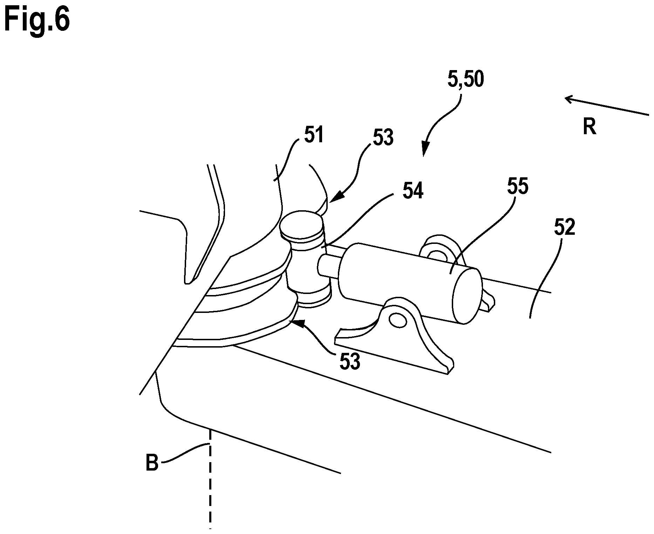

Wie in Fig.5 dargestellt ist, ist die Landmaschine 10 während der Straßenfahrt über das Verbindungssystem 5 mit dem Zugfahrzeug 1 verbunden, das zum Beispiel ein Schlepper sein kann. An dessen Fahrzeugkörper 2 ist ein Dreipunkt-Hubwerk 3 angeordnet. Wie bereits erwähnt, weist das Verbindungssystem 5 eine Deichseleinheit 50 auf. Letztere ist mit einem Abstützteil 51 am Dreipunkt-Hubwerk 3 angekoppelt und daran abgestützt. Ein Schwenkteil 52 ist um eine senkrecht verlaufende zweite oder vordere Deichselachse B schwenkbar mit dem Abstützteil 51 verbunden. Ein Deichselausleger 57 ist um einer waagerecht verlaufende Aufstellachse C mit dem Schwenkteil 52 verbunden. Wie in der Detailansicht in Fig. 6 erkennbar ist, ist am Schwenkteil 52 ein Arretierzylinder 55 angeordnet, mittels dessen ein Arretierelement 54 aus- und einfahrbar ist. Fig. 6 zeigt dabei das Arretierelement 54 in einer ausgefahrenen Position. Das Arretierelement 54 wirkt mit einer positionsfest am Abstützteil 51 befestigten Kurvenbahn 53 zusammen. Deren Profil ist so ausgebildet, dass ein Ausfahren des Arretierelements 54 das Schwenkteil 52 einschließlich des damit verbundenen Deichselauslegers 57 in eine Mittelposition schwenkt und in dieser zurückhält. Dies kann eine vollständige Arretierung bedeuten oder ein elastisches Zurückhalten. In letzterem Fall ist das Schwenkteil 52 zwar durch ein äußeres Drehmoment entgegen eines Rückstellmoments begrenzt aus der Mittelposition auslenkbar, wird aber in Abwesenheit des äußeren Drehmoments wieder in die Mittelposition zurückgestellt. Gemäß einer nicht dargestellten Alternative könnte das Schwenkteil 52 auch mittels eines entsprechenden Aktors aktiv um die vordere Deichselachse B schwenkbar sein. Über den Aktor könnte dann eine beliebige Position, insbesondere die Mittelposition, eingestellt werden. Der Deichselausleger 57 ist mit dem Schwenkteil 52 durch einen Aufstellzylinder 56 verbunden. Fig. 5 zeigt den Aufstellzylinder 56 in ausgefahrener Position, wobei der Deichselausleger 57 in einer Zugposition annähernd waagerecht ausgerichtet ist. Durch Einfahren des Aufstellzylinder 56 kann der Deichselausleger 57 in eine nicht dargestellte, annähernd senkrechte Aufstellposition geschwenkt werden. Diese kann eingestellt werden, wenn das Zugfahrzeug 1 ohne die Landmaschine 10 auf einer Straße fährt. Dabei wird auch das Schwenkteil 52 in die Mittelposition gestellt und in dieser zurückgehalten.

Gemäß einer nicht dargestellten Variante kann der Deichselausleger 57 gegenüber dem Abstützteil 51 um eine weitere Schwenkachse schwenkbar sein, die bevorzugt in einem Winkel von 80° bis 100°, insbesondere 90°, zur Aufstellachse C verläuft und die ebenfalls bevorzugt wenigstens in der Zugposition in einem Winkel zwischen 70° und 100°, insbesondere 80° bis 100°, zur horizontalen Ebene verläuft. Die genannte Schwenkachse kann insbesondere wenigstens in der Zugposition parallel zur Längsachse des Deichselauslegers 57 verlaufen. Hierdurch könnten rotatorische Relativbewegungen um die Längsachse des Zugfahrzeugs 1 und/oder um die Längsachse X der Landmaschine 10 ausgeglichen werden. Um die Schwenkbarkeit zu realisieren, könnte der Abstützteil 51, der Schwenkteil 52 und/oder der Deichselausleger 57 durch zwei gegeneinander schwenkbare Teile ersetzt werden.

Für die Straßenfahrt ist die Deichseleinheit 50 über miteinander zusammenwirkende Kopplungselemente 18, 58, 61 mit dem Deichselelement 16 koppelbar. Wenn der Einsatzort der Landmaschine erreicht wurde, wird die Deichseleinheit 50 entkoppelt und die Landmaschine 10 kann die Feldbearbeitung durchführen. Hierzu kann beispielsweise einen in Fig. 5 stark schematisiert angedeutetes Anbaugerät 8 eingesetzt werden, welches bevorzugt auch bei der Straßenfahrt an den Fahrzeugkörper 12 angekoppelt und vergleichsweise dicht oberhalb des Deichselauslegers 57 angeordnet ist.

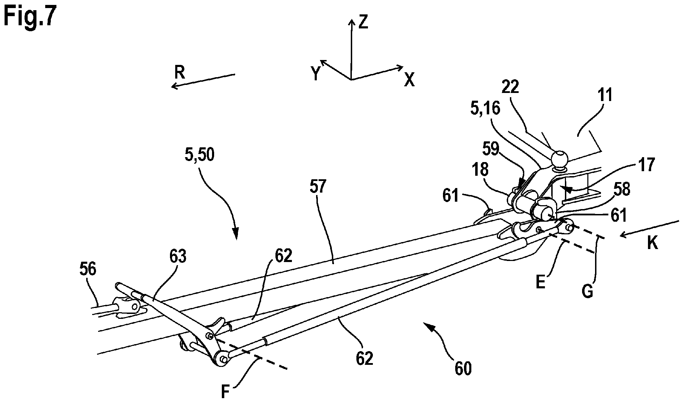

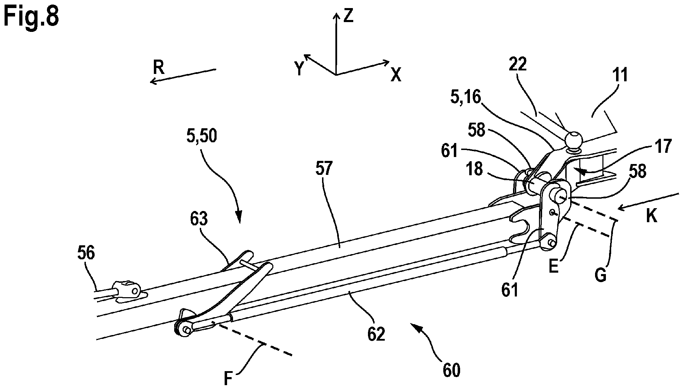

Der Ankopplungsvorgang wird nun mit Bezug auf Fig. 7 und 8 erläutert. Ein zylinderförmiges erstes Anschlag-Kopplungselement 18 ist starr mit dem Deichselelement 16 verbunden. Der Deichselausleger 57 weist endseitig zwei hakenartig ausgebildete zweite Anschlag-Kopplungselemente 58 auf, die dazu ausgebildet sind, das erste Anschlag-Kopplungselement 18 von hinten zu umgreifen, wenn der Deichselausleger 57 und das Deichselelement 16 in einer in Fig.7 und 8 dargestellten Kopplungsposition zueinander angeordnet sind. Zum Ankoppeln werden die zweiten Anschlag-Kopplungselemente 58 zunächst hinter das erste Anschlag-Kopplungselement 18 bewegt. Hierzu kann der Deichselausleger 57 zunächst mittels des Aufstellzylinders 56 gegenüber der Waagerechten leicht abwärts geschwenkt werden, so dass die zweiten Anschlag-Kopplungselemente 58 unter dem ersten Anschlag-Kopplungselement 18 hindurchgeführt werden können, während die Zugmaschine 1 rückwärts fährt. Dann wird der Deichselausleger 57 in die Waagerechte geschwenkt und das Zugfahrzeug 1 kann vorwärtsfahren, wobei sich der Deichselausleger 57 mit den zweiten Anschlag-Kopplungselementen 58 relativ zum Deichselelement 16 entlang einer Kopplungsrichtung K bewegt, die in diesem Fall antiparallel zur Längsachse X verläuft. Die Breite des Deichselelements 16 ist dabei so auf den seitlichen Abstand der zweiten Anschlag-Kopplungselemente 58 abgestimmt, dass es in der Kopplungsposition praktisch spielfrei zwischen ihnen aufgenommen ist. Dabei nimmt die Breite des Deichselelements 16 bezüglich der Querachse Y entlang der Kopplungsrichtung K zu, wobei beiderseits des Deichselelement 16 gegenüber der Kopplungsrichtung K schräg verlaufende erste Führungsflächen 17 ausgebildet sind, die mit durch die zweiten Anschlag-Kopplungselemente 58 gebildeten zweiten Führungsflächen 59 zusammenwirken. Ein zwischen den Führungsflächen 17, 59 definierter Spielraum verringert sich entlang der Kopplungsrichtung, bis er in der Kopplungsposition vernachlässigbar klein ist. Somit ist ein praktisch vollständiger Formschluss bezüglich der Querachse Y gegeben.

Die Kopplung zwischen der Deichseleinheit 50 und dem Deichselelement 16 wird mittels eines Verriegelungsmechanismus 60 abgeschlossen. Dieser weist beiderseits außenseitig der zweiten Anschlag-Kopplungselemente 58 angeordnete Stell-Kopplungselemente 61 auf, die um eine Kopplungselement-Schwenkachse E schwenkbar sind. Sie sind über zwei Koppelstangen 62 mit einem in sich starren Bedienhebel 63 verbunden, der seinerseits wiederum um eine Bedienhebel-Schwenkachse F schwenkbar mit dem Deichselausleger 57 verbunden ist. Jede Koppelstange ist in sich starr ausgebildet und beiderseits schwenkbar angebunden. Durch Schwenken des Bedienhebels 63 können die Stell-Kopplungselemente 61 aus einer in Fig. 7 dargestellten Freigabeposition in eine in Fig. 8 dargestellte Arretierungsposition geschwenkt werden. In der Arretierungsposition ist das erste Anschlag-Kopplungselement 18 zwischen den zweiten Anschlag-Kopplungselementen 58 und den Stell-Kopplungselementen 61 eingeschlossen, d. h. es besteht ein Formschluss bezüglich der Längsachse X, der Querachse Y und der Hochachse Z. Insbesondere ist die Verbindung auch verdrehsicher bezüglich der Hochachse Z, wodurch Schwenkbewegungen seitens der Deichseleinheit unmittelbar auf das Deichselelement 16 übertragen werden. Der Deichselausleger 57 und das Deichselelement 16 sind somit translatorisch sowie teilweise rotatorisch gegeneinander arretiert. Allerdings bleibt ein rotatorischer Freiheitsgrad erhalten, da der Deichselausleger 57 relativ zum Deichselelement 16 um eine Kopplungs-Schwenkachse G schwenken kann, welche horizontal durch das erste Anschlag-Kopplungselement 18 verläuft. Das Erreichen der Arretierposition der Stell-Kopplungselemente 61 kann auf Seiten des Deichselelements 16 durch einen nicht dargestellten Kopplungssensor registriert werden, worauf hin die Steuereinheit 45 der Landmaschine 10 automatisch vom Einzellenkungsmodus in den für die Straßenfahrt vorgesehenen Verzögerungslenkungsmodus wechseln kann.

Wie in Fig. 5 gut erkennbar ist, sind die Koppelstangen 62 so lang ausgebildet, dass der Bedienhebel 63 bezüglich der Längsachse X noch vor dem Anbaugerät 8 angeordnet ist. Dementsprechend muss ein Benutzer zum Betätigen des Bedienhebels 63 nicht in den beengten Raum unterhalb des Anbaugeräts 8 fassen. Die Länge jeder Koppelstange 62, das heißt der Abstand ihrer Schwenkpunkte, stimmt nicht mit dem Abstand der Kopplungselement-Schwenkachse E von der Bedienhebel-Schwenkachse F überein, sondern ist etwas größer bemessen. Infolgedessen ist ein Schwenken des Bedienhebels 63 nur unter geringfügiger Verformung der beteiligten Bauteile möglich, wobei sich zwischen der in Fig. 7 dargestellten Position und der in Fig. 8 dargestellten Position ein instabiler Punkt ergibt, der durch ein entsprechendes Drehmoment überwunden werden muss. Von dem instabilen Punkt aus kehrt der Bedienhebel 63 ohne äußere Kräfte in die jeweils nächstgelegene Position zurück. Dies sorgt zum einen dafür, dass der Verriegelungsmechanismus 60 in die Arretierungsposition geführt wird, sowie zum anderen, dass er diese nicht ohne nennenswerte äußere Kräfte wieder verlässt.

Optional kann das Verbindungssystems 5 eine Kamera 65 oder einen anderen Sensor aufweisen, mittels dessen ein Fahrer des Zugfahrzeugs 1 den Kopplungsvorgang überwachen kann. In Fig. 5 ist die Kamera stark schematisiert durch eine gestrichelte Linie dargestellt, wobei sie beispielhaft am Deichselausleger 57, in der Nähe des Deichselelements 16, angeordnet ist. Sie könnte aber auch beispielsweise am Schwenkteil 52, am Abstützteil 51 oder sogar am Deichselelement 16 angeordnet sein. In letzterem Fall könnte eine drahtlose Bildübertragung an das Zugfahrzeug 1 erfolgen. Um die Bedienung des Verriegelungsmechanismus 60 weiter zu erleichtern, könnte dieser einen Bedienaktor 64 aufweisen, welcher in Fig. 5 ebenfalls gestrichelt dargestellt ist und einerseits am Deichselausleger 57 sowie andererseits am Bedienhebel 63 ansetzt. In diesem Fall wäre es selbstverständlich auch möglich, den Verriegelungsmechanismus 60 insgesamt umzugestalten, wobei beispielsweise auf die langen Kopplungsstangen 62 verzichtet werden könnte. Der Bedienaktor 64 kann vorteilhaft von der Zugmaschine 1 aus angesteuert werden.

Gemäß einer hier nicht dargestellten alternativen Ausführungsform kann der Verriegelungsmechanismus 60 auch ein als Rastelement ausgebildetes Stell-Kopplungselement 61 aufweisen, das bei Annäherung an die Kopplungsposition zunächst vom ersten Anschlag-Kopplungselement 18 aus einer Ruhelage, die der Arretierungsposition entspricht, elastisch ausgelenkt wird und bei Erreichen der Kopplungsposition in die Ruheposition zurückkehrt, wobei es einen Formschluss mit dem ersten Anschlag-Kopplungselement 18 herstellt.

Eine weitere nicht dargestellte Alternative sieht vor, dass die Kopplungsrichtung K nicht nach vorne, sondern nach hinten in Richtung der Längsachse X weist, wobei die Deichseleinheit 50 in die Kopplungsposition gebracht werden kann, indem das Zugfahrzeug 1 rückwärts an die Landmaschine 10 heranfährt. Dabei könnten gegenüber der Kopplungsrichtung K abgeschrägte Führungsflächen einen Trichter bilden, durch welchen die Deichseleinheit 50 mit dem wenigstens einen zweiten Anschlag-Kopplungselement 58 bei Rückwärtsfahren gewissermaßen automatisch in die Kopplungsposition geführt wird.

## Patentansprüche

1. Verbindungssystem (5) zur Verbindung einer Landmaschine (10) mit einem Zugfahrzeug (1), mit einer Deichseleinheit (50), die ein Abstützteil (51) zur Abstützung am Zugfahrzeug (1) aufweist sowie einen wenigstens indirekt mit dem Abstützteil (51) verbundenen und gegenüber diesem um eine vordere Deichselachse (B) schwenkbaren Deichselausleger (57), wobei am Deichselausleger (57) wenigstens ein Kopplungselement (18, 58, 61) zur wenigstens indirekten Ankopplung an die Landmaschine (10) angeordnet ist.

2. Verbindungssystem nach Anspruch 1, **dadurch gekennzeichnet, dass** dieses ein Deichselelement (16) aufweist, welches für eine um eine hintere Deichselachse (A) schwenkbare, wenigstens indirekte Verbindung mit einem Rahmen (11) der Landmaschine (10) eingerichtet ist, wobei am Deichselausleger (57) und am Deichselelement (16) miteinander korrespondierende Kopplungselemente (18, 58, 61) angeordnet sind, die dazu eingerichtet sind, in einer Arretierungsposition den Deichselausleger (57) und das Deichselelement (16) wenigstens translatorisch zu koppeln, wenn diese in einer Kopplungsposition zueinander angeordnet sind, wobei wenigstens ein Kopplungselement (18, 58, 61) in eine Freigabeposition verstellbar ist, um den Deichselausleger (57) vom Deichselelement (16) zu lösen.

3. Verbindungssystem nach einem der vorangehenden Ansprüche, **dadurch gekennzeichnet, dass** wenigstens ein erstes Anschlag-Kopplungselement (18) starr mit dem Deichselelement (16) verbunden ist und wenigstens ein zweites Anschlag-Kopplungselement (58) starr mit dem Deichselausleger (57) verbunden ist und in der Kopplungsposition einen Formschluss mit dem wenigstens einen ersten Kopplungselement (18) bildet, wobei wenigstens ein Stell-Kopplungselement (61) zwischen der Arretierungsposition und der Freigabeposition verstellbar ist.

4. Verbindungssystem nach einem der vorangehenden Ansprüche, **dadurch gekennzeichnet, dass** wenigstens ein Stell-Kopplungselement (61) verstellbar mit dem Deichselausleger (57) verbunden ist und in der Arretierungsposition wenigstens ein erstes Anschlag-Kopplungselement (18) zwischen einem Stell-Kopplungselement (61) und einem zweiten Anschlag-Kopplungselement (58) formschlüssig aufgenommen ist.

5. Verbindungssystem nach einem der vorangehenden Ansprüche, **dadurch gekennzeichnet, dass** der Deichselausleger (57) und das Deichselelement (16) in einer wenigstens anteilig horizontalen Kopplungsrichtung (K) in die Kopplungsposition führbar sind, wobei die Anschlag-Kopplungselemente (18, 58) in der Kopplungsposition wenigstens in Kopplungsrichtung (K) einen Formschluss bilden.

6. Verbindungssystem nach einem der vorangehenden Ansprüche, **dadurch gekennzeichnet, dass** dieses gegenüber dem Deichselelement (16) stationäre erste Führungsflächen (17) und gegenüber dem Deichselausleger (57) stationäre zweite Führungsflächen (59) aufweist, welche zwischen sich einen Spielraum quer zur Kopplungsrichtung (K) definieren, wobei wenigstens eine Führungsfläche (17, 59) wenigstens bereichsweise derart gegenüber der Kopplungsrichtung (K) abgeschrägt ist, dass sich der Spielraum bei Annäherung an die Kopplungsposition verringert.

7. Verbindungssystem nach einem der vorangehenden Ansprüche, **dadurch gekennzeichnet, dass** am Deichselausleger (57) ein Verriegelungsmechanismus (60) angeordnet ist, welcher das wenigstens eine Stell-Kopplungselement (61) aufweist und durch den das wenigstens eine Stell-Kopplungselement (61) fernbedienbar ist.

8. Verbindungssystem nach einem der vorangehenden Ansprüche, **dadurch gekennzeichnet, dass** der Verriegelungsmechanismus (60) einen schwenkbar am Deichselausleger (57) angeordneten Bedienhebel aufweist, der im Abstand zum wenigstens einen Stell-Kopplungselement (61) angeordnet und kraftübertragend mit diesem verbunden ist, insbesondere über wenigstens eine Koppelstange (62).

9. Verbindungssystem nach einem der vorangehenden Ansprüche, **dadurch gekennzeichnet, dass** das wenigstens eine Stell-Kopplungselement (61) durch den Verriegelungsmechanismus (60) aktorisch verstellbar ist.

10. Verbindungssystem nach einem der vorangehenden Ansprüche, **dadurch gekennzeichnet, dass** wenigstens ein Stell-Kopplungselement (61) als Rastelement ausgebildet ist, welches dazu eingerichtet ist, bei Annäherung an die Kopplungsposition entgegen einer Rückstellkraft elastisch aus der Verriegelungsposition ausgelenkt zu werden und bei Erreichen der Kopplungsposition der Rückstellkraft folgend in die Verriegelungsposition zurückzukehren.

11. Verbindungssystem nach einem der vorangehenden Ansprüche, **dadurch gekennzeichnet, dass** der Deichselausleger (57) um eine wenigstens anteilig horizontale Aufstellachse (C) gegenüber dem Abstützteil (51) schwenkbar ist zwischen einer Zugposition und einer Aufstellposition, wobei er bevorzugt aktorisch um die Aufstellachse (C) schwenkbar ist.

12. Verbindungssystem nach einem der vorangehenden Ansprüche, **dadurch gekennzeichnet, dass** die Deichseleinheit (50) ein mit dem Abstützteil (51) um die vordere Deichselachse (B) schwenkbar verbundenes Schwenkteil (52) aufweist, mit welchem der Deichselausleger (57) um die Aufstellachse (C) schwenkbar verbunden ist.

13. Verbindungssystem nach einem der vorangehenden Ansprüche, **dadurch gekennzeichnet, dass** der Deichselausleger (57) bezüglich der vorderen Deichselachse (B) relativ zum Abstützteil (51) in einer Mittelposition rückhaltbar ist, wobei er bevorzugt aktorisch in die Mittelposition führbar und/oder aktorisch in der Mittelposition rückhaltbar ist.

14. Verbindungssystem nach einem der vorangehenden Ansprüche, **dadurch gekennzeichnet, dass** dieses wenigstens einen Überwachungssensor, insbesondere eine Kamera (65), aufweist, welcher dazu eingerichtet ist, eine Annäherung an die Kopplungsposition zu überwachen.

15. Verbindungssystem nach einem der vorangehenden Ansprüche, **dadurch gekennzeichnet, dass** dieses wenigstens einen Kopplungssensor aufweist, welcher dazu eingerichtet ist, das Erreichen der Arretierungsposition festzustellen und ein Arretierungssignal an eine Steuereinheit (45) der Landmaschine (10) zu senden.

16. Verbindungssystem nach einem der vorangehenden Ansprüche, **dadurch gekennzeichnet, dass** dieses die Landmaschine (10) aufweist, wobei deren Steuereinheit (45) dazu eingerichtet ist, bei Empfang des Arretierungssignals in einen für eine Straßenfahrt vorgesehenen Modus zu wechseln.

17. Verfahren zum Verbinden einer Landmaschine (10) mit einem Zugfahrzeug (1), wobei eine Deichseleinheit (50), die ein Abstützteil (51) aufweist sowie einen wenigstens indirekt mit dem Abstützteil (51) verbundenen und gegenüber diesem um eine vordere Deichselachse (B) schwenkbaren Deichselausleger (57), sich mit dem Abstützteil (51) am Zugfahrzeug (1) abstützt und wobei am Deichselausleger (57) wenigstens ein Kopplungselement (18, 58, 61) angeordnet ist, mittel dessen der Deichselausleger (57) wenigstens indirekt an die Landmaschine (10) angekoppelt wird.

18. Verfahren nach Anspruch 17, **dadurch gekennzeichnet, dass** ein Deichselelement (16) um eine hintere Deichselachse (A) schwenkbar, wenigstens indirekt mit einem Rahmen (11) der Landmaschine (10) verbunden ist, wobei am Deichselausleger (57) und am Deichselelement (16) miteinander korrespondierende Kopplungselemente (18, 58, 61) angeordnet sind, wobei der Deichselausleger (57) und das Deichselelement (16) in einer Kopplungsposition angeordnet werden und mittels der Kopplungselemente (18, 58, 61) wenigstens translatorisch gekoppelt werden, wozu wenigstens ein wenigstens ein Kopplungselement (18, 58, 61) aus einer Freigabeposition zum Lösen des Deichselauslegers (57) vom Deichselelement (16), in eine Arretierungsposition verstellt wird.
